# EUROPEAN PATENT SPECIFICATION

(11) **EP 3 554 139 B1**
(45) Date of publication and mention of the grant of the patent: **23.03.2022**
(21) Application number: 17878058.1
(22) Date of filing: 06.12.2017
(51) Int. Cl.: H04W 48/08, H04W 48/16

(54) **ACCESS PROCESSING METHOD, BASE STATION AND MOBILE COMMUNICATION TERMINAL**
ZUGANGSVERARBEITUNGSVERFAHREN, BASISSTATION UND MOBILKOMMUNIKATIONSENDGERÄT
PROCÉDÉ DE TRAITEMENT D'ACCÈS, STATION DE BASE ET TERMINAL DE COMMUNICATION MOBILE

(30) Priority: 06.12.2016 CN 201611110499
(43) Date of publication of application: 16.10.2019
(73) Proprietor: China Mobile Communication Ltd., Research Institute, Beijing 100053 (CN); China Mobile Communications Corporation, Beijing 100032 (CN)
(72) Inventor: LIU, Liang, Beijing 100032 (CN); LI, Gang, Beijing 100032 (CN); XU, Xiaodong, Beijing 100032 (CN); CHEN, Yami, Beijing 100032 (CN); YANG, Guang, Beijing 100032 (CN)
(74) Representative: GPI & Associés
(86) International application number: PCT/CN2017/114792
(87) International publication number: WO 2018/103658

(56) References cited:
- WO-A1-2015/061951
- WO-A1-2016/113083
- CN-A- 101 500 281
- CN-A- 102 448 142
- US-A1- 2004 162 077
- US-A1- 2014 286 261
- "3rd Generation Partnership Project; Technical Specification Group Radio Access Network; Study on New Radio Access Technology; Radio Access Architecture and Interfaces (Release 14)", 3GPP DRAFT; RP-162255_TR 38 801 V100, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN 29 November 2016 (2016-11-29), XP051663945, Retrieved from the Internet: URL:http://www.3gpp.org/ftp/tsg%5Fran/TSG% 5FRAN/TSGR%5F74/Docs/RP%2D162255%2Ezip [retrieved on 2016-11-29]

## Description

### CROSS-REFERENCE TO RELATED APPLICATION

The present invention is defined by appended claims.

### TECHNICAL FIELD

The present disclosure relates to the field of mobile communication access technology, in particular to access processing methods, a base station and a mobile communication terminal.

### BACKGROUND

Mobile communication has profoundly changed our daily lives, and people have never stopped seeking for high-performance mobile communication. A 5^{th}-Generation (5G) mobile communication system has emerged, so as to meet the requirements on an explosive growth of mobile data traffic, the connection among a huge number of devices as well as the continuous appearance of new services and application scenarios.

International Telecommunication Union (ITU) has defined three typical application scenarios for the 5G mobile communication system, and formulated eight key abilities. How to meet the requirements on these scenarios and the key abilities has become a critical issue to the communication industry. Considering such factors as the requirements, a technical development trend and smooth evolution, there shall concurrently exist two routes for the 5G mobile communication system, i.e., new air interface and evolved air interface on the basis of a 4^{th}-Generation (4G) mobile communication system. Before the commercial use of the 5G mobile communication system, the 4G mobile communication system will evolve continuously so as to meet the increasing requirement on system capacity. Hence, the 4G mobile communication system and the 5G mobile communication system will coexist and interoperate within a long time period.

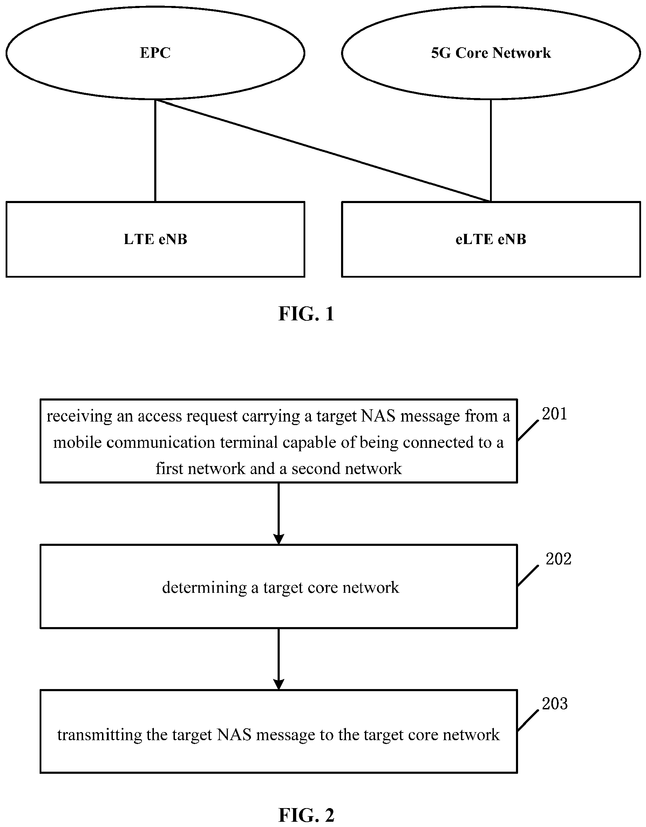

Considering the evolution of the 4G mobile communication system to the 5G mobile communication system in the related art, as shown in FIG. 1, a Long Term Evolution (LTE) evolved Node B (eNB) which accesses to an Evolved Packet Core (EPC) of the 4G mobile communication system needs to be concurrently connected to the EPC and a new core network of the 5G mobile communication system.

However, in terms of the evolution, a future mobile communication terminal needs to support the access to the EPC and the access to the 5G new core network simultaneously, and the LTE eNB and an evolved LTE (eLTE) eNB need to coexist too. Hence, there is an urgent need to provide a scheme to enable the mobile communication terminal to access to the EPC and the 5G new core network simultaneously. Besides, some documents are known, as RP-162255 "3rd Generation Partnership Project; Technical Specification Group Radio Access Network; Study on New Radio Access Technology; Radio Access Architecture and Interfaces (Release 14)", vol. TSG RAN 29 November 2016 (2016-11-29); US2004162077 and WO2016113083. RP-162255_TR discloses methods for selection of Network slice and CN entity by gNB in a communication system.US 2004/162077 A1 discloses methods for performing routing in a communication system including a RAN and a plurality of core networks connected to the RAN. The routing and rejection of a registration request to a serving core network: a core network is selected for a received registration request. The registration request is then forwarded to the selected CN and, in response to at least one predetermined criterion being fulfilled, the selected CN is notified that the registration request is to be served by that CN.WO 2016/113083 A1 discloses MME selection in a communication system as well as re-routing NAS messages in the process of network selection.

### SUMMARY

As per the claims, the present disclosure aims to provide access processing methods, a base station and a mobile communication terminal, so as to enable the mobile communication terminal to access to different core networks via different types of base stations.

### BRIEF DESCRIPTION OF THE DRAWINGS

FIG. 1 is a schematic view showing an eLTE eNB evolved from an LTE eNB and connected to an EPC and a 5G new core network in the related art;
FIG. 2 is a flow chart of an access processing method according to some embodiments of the present disclosure;
FIG. 3 is another flow chart of the access processing method according to some embodiments of the present disclosure;
FIG. 4 is yet another flow chart of the access processing method according to some embodiments of the present disclosure;
FIG. 5 is still yet another flow chart of the access processing method according to some embodiments of the present disclosure;
FIG. 6 is a flow chart of an access processing method according to some embodiments of the present disclosure;
FIG. 7 is another flow chart of the access processing method according to some embodiments of the present disclosure;
FIG. 8 is yet another flow chart of the access processing method according to some embodiments of the present disclosure;
FIG. 9 is still yet another flow chart of the access processing method according to some embodiments of the present disclosure;
FIG. 10 is still yet another flow chart of the access processing method according to some embodiments of the present disclosure;
FIG. 11 is a schematic view showing a base station according to some embodiments of the present disclosure;
FIG. 12 is a schematic view showing a mobile communication terminal according to some embodiments of the present disclosure;
FIG. 13 is schematic view showing an access procedure where network information is carried in an access request according to some embodiments of the present disclosure; and
FIG. 14 is a schematic view showing an access procedure where an NAS message and an identifier of the NAS message are carried in the access request according to some embodiments of the present disclosure.

### DETAILED DESCRIPTION OF THE EMBODIMENTS

According to the embodiments of the present disclosure, upon the receipt of an access request carrying a target NAS message from a mobile communication terminal capable of being connected to a first network and a second network simultaneously, a base station may transmit the target NAS message to a target core network to which the base station is connected, and the target core network may determine whether the mobile communication terminal is allowed to be connected to the target core network in accordance with the target NAS message. As a result, it is able for the mobile communication terminal capable of being connected to various core networks to access to the core network through different base stations, thereby to provide services to a user.

The present disclosure provides in some embodiments an access processing method for use in a base station which, as shown in FIG. 2, includes: Step 201 of receiving an access request carrying a target NAS message from a mobile communication terminal capable of being connected to a first network and a second network, the target NAS message including a first NAS message corresponding to the first network and/or a second NAS message corresponding to the second network; Step 202 of determining a target core network, the target core network being a core network to which the base station is capable of accessing among a first core network corresponding to the first network and a second core network corresponding to the second network; and Step 203 of transmitting the target NAS message to the target core network.

In some embodiments of the present disclosure, upon the receipt of the access request carrying the target NAS message (e.g., the first NAS message corresponding to the first network, the second NAS message corresponding to the second network, or both) from the mobile communication terminal capable of being connected to the first network and the second network simultaneously, the base station may transmit the target NAS message to the target core network to which the base station is connected, and the target core network may determine whether the mobile communication terminal is allowed to be connected to the target core network in accordance with the target NAS message. On the basis of the above procedure, the mobile communication terminal capable of being connected to various core networks may access to the core network through different base stations, and thereby the code network may determine whether the mobile communication terminal is allowed to access to the core network.

In some embodiments of the present disclosure, the target NAS message may include one of the first NAS message and the second NAS message, or both. The NAS message, which belongs to an NAS, is unknown to a base station which belongs to an access stratum. Hence, a network corresponding to the target core network determined by the base station may probably be different from a network corresponding to the target NAS message. In this case, the target core network may reject the access of the mobile communication terminal thereto. In order to enable the mobile communication terminal to access to an appropriate core network, in a possible embodiment of the present disclosure, an access rejection message may be fed back to the mobile communication terminal, so as to notify the mobile communication terminal to re-initiate an access procedure in accordance with a new NAS message.

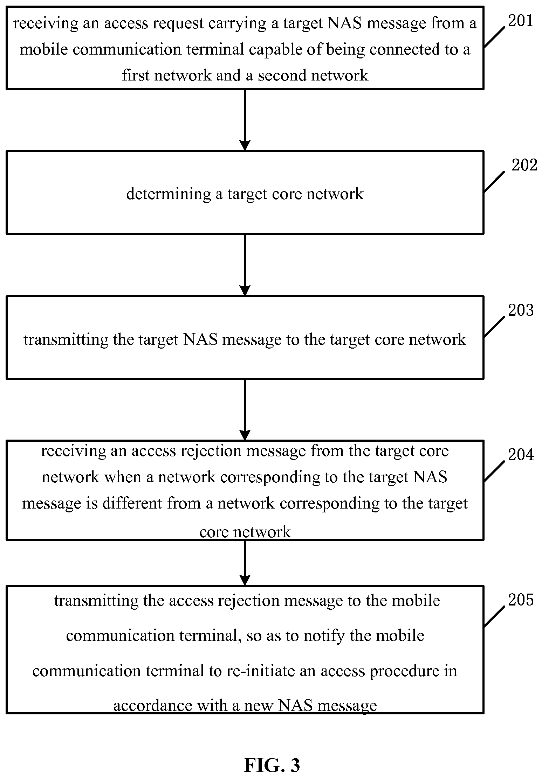

As shown in FIG. 3, the present disclosure further provides in some embodiments an access processing method which includes: Step 201 of receiving an access request carrying a target NAS message from a mobile communication terminal capable of being connected to a first network and a second network, the target NAS message including a first NAS message corresponding to the first network and/or a second NAS message corresponding to the second network; Step 202 of determining a target core network, the target core network being a core network to which the base station is capable of accessing among a first core network corresponding to the first network and a second core network corresponding to the second network; Step 203 of transmitting the target NAS message to the target core network; Step 204 of receiving an access rejection message from the target core network when a network corresponding to the target NAS message is different from a network corresponding to the target core network; and Step 205 of transmitting the access rejection message to the mobile communication terminal, so as to notify the mobile communication terminal to re-initiate an access procedure in accordance with a new NAS message.

According to the access processing method in the embodiments of the present disclosure, when the network corresponding to the target core network determined by the base station is different from the network corresponding to the target NAS message (i.e., there is NAS mismatching), the base station may forward the access rejection message from the target core network to the mobile communication terminal, so that the mobile communication terminal may select the new NAS message to re-initiate the access procedure. As a result, it is able for the mobile communication terminal to access to the target core network.

Detailed description will be illustratively given as follows.

When the second NAS message corresponding to the second network is carried in the access request from the mobile communication terminal and the target core network selected by the base station corresponds to the first core network corresponding to the first network (because the base station is merely capable of being connected to the first core network corresponding to the first network, or the base station, which is capable of being connected to the first core network and the second core network simultaneously, selects the first core network in accordance with a selection policy), i.e., when the first network corresponding to the target core network determined by the base station is different from the second network corresponding to the target NAS message, the first core network may reject the access of the mobile communication terminal thereto.

Upon the receipt of the access rejection message, the mobile communication terminal may re-transmit the access request carrying the first NAS message corresponding to the first network. At this time, the first network corresponding to the target core network determined by the base station may be the same as the first network corresponding to the target NAS message, so it is able for the mobile communication terminal to access to the first core network, thereby to provide services to the user.

According to the embodiments of the present disclosure, when the network corresponding to the target core network determined by the base station is different from the network corresponding to the target NAS message, the mobile communication terminal may re-initiate the access procedure in accordance with the new NAS message. As a result, it is able for the mobile communication terminal to access to an appropriate core network, thereby to provide services to the user.

It is found from the above-mentioned procedures that, multiple access procedures may occur and thereby an access speed may be reduced. One circumstance for an access failure lies in that the base station is merely capable of being connected to one core network and the network corresponding to the NAS message from the mobile communication terminal is different from the network corresponding to the only core network to which the base station is capable of being connected.

Hence, in some embodiments of the present disclosure, in order to prevent the occurrence of access failure due to the above reason, the base station may notify the mobile communication terminal of network information about a network corresponding to the core network to which the base station is capable of being connected, so that the mobile communication terminal is capable of selecting the NAS message corresponding to the network during the initiation of the access procedure.

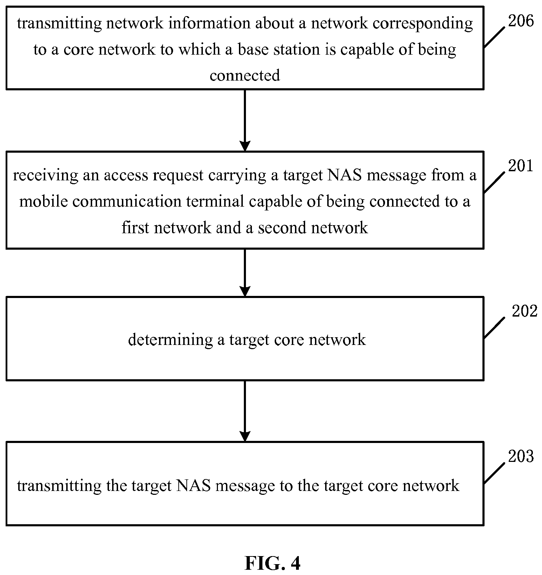

As shown in FIG. 4, the present disclosure further provides in some embodiments an access processing method which includes: Step 206 of transmitting network information about a network corresponding to a core network to which a base station is capable of being connected; Step 201 of receiving an access request carrying a target NAS message from a mobile communication terminal capable of being connected to a first network and a second network, the target NAS message being an NAS message selected by the mobile communication terminal for the network corresponding to the core network to which the base station is capable of being connected from a first NAS message and a second NAS message in accordance with the network information; Step 202 of determining a target core network, the target core network being a core network to which the base station is capable of accessing among a first core network corresponding to the first network and a second core network corresponding to the second network; and Step 203 of transmitting the target NAS message to the target core network.

In some embodiments of the present disclosure, the base station may notify in advance the mobile communication terminal of the network information about the network corresponding to the core network to which the base station is capable of being connected, so as to enable the mobile communication terminal to select the NAS message corresponding to the network. As a result, it is able to prevent the re-access procedure caused when the network corresponding to the only core network to which the base station is capable of being connected is different from the network corresponding to the target NAS message, thereby to accelerate the access.

When the base station is merely capable of being connected to the first core network and the mobile communication terminal has been notified of this fact, the mobile communication terminal may merely initiate the access procedure in accordance with the NAS message corresponding to the first network rather than the NAS message corresponding to the second network, and vice versa.

It is found from the above-mentioned procedures that, when the target NAS message and the target core network are selected randomly, a re-access procedure may occur, especially in another circumstance where the base station is capable of being connected to the first core network and the second core network simultaneously but the network corresponding to the core network selected by the base station in accordance with a selection policy is different from the network corresponding to the target NAS message.

In order to solve the above problem, in some embodiments of the present disclosure, a network identify of a the network corresponding to the target NAS message may be carried in the access request, so as to enable the base station to select a matched core network (i.e., enable the network corresponding to the core network to be the same as the network corresponding to the NAS message), thereby to prevent the occurrence of access failure.

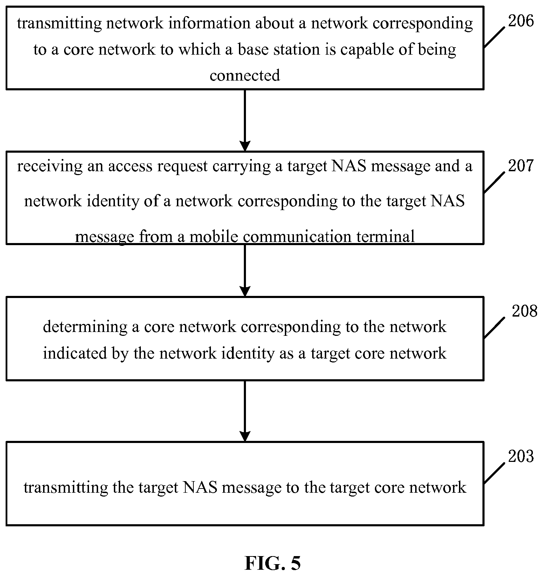

As shown in FIG. 5, the present disclosure further provides in some embodiments an access processing method which includes: Step 206 of transmitting network information about a network corresponding to a core network to which a base station is capable of being connected; Step 207 of receiving an access request carrying a target NAS message and a network identity of a network corresponding to the target NAS message from a mobile communication terminal capable of being connected to a first network and a second network, the target NAS message being an NAS message selected by the mobile communication terminal for the network corresponding to the core network to which the base station is capable of being connected from a first NAS message and a second NAS message in accordance with the network information; Step 208 of determining a core network corresponding to the network indicated by the network identity as a target core network; and Step 203 of transmitting the target NAS message to the target core network.

According to the embodiments of the present disclosure, the base station may notify in advance the mobile communication terminal of the network information about the network corresponding to the core network to which the base station is capable of being connected, so as to enable the mobile communication terminal to select the NAS message for the network corresponding to the core network to which the base station is capable of being connected. As a result, it is able to prevent the re-access procedure caused when the network corresponding to the only core network to which the base station is capable of being connected is different from the network corresponding to the target NAS message, thereby to accelerate the access. In addition, the network identity of the network corresponding to the target NAS message is carried in the access request, so the target core network determined by the base station may be the same as the network corresponding to the target NAS message. As a result, it is able for the mobile communication terminal to access to the core network through a single access procedure, thereby to accelerate the access.

In some embodiments of the present disclosure, the network information about the network corresponding to the core network to which the base station is capable of being connected may be transmitted through a system information block (SIB) or radio resource control (RRC) signaling.

Corresponding to the method for use in the base station, the present disclosure further provides in some embodiments an access processing method for use in the mobile communication terminal.

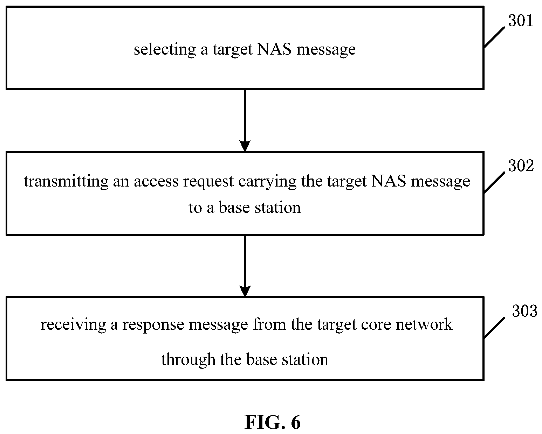

As shown in FIG. 6, the present disclosure further provides in some embodiments an access processing method for use in a mobile communication terminal capable of being connected to a first network and a second network, which includes: Step 301 of selecting a target NAS message, the target NAS message including a first NAS message corresponding to the first network and/or a second NAS message corresponding to the second network; Step 302 of transmitting an access request carrying the target NAS message to a base station, so that the base station transmits the target NAS message to a target core network, the target core network being a core network to which the base station is capable of accessing among a first core network corresponding to the first network and a second core network corresponding to the second network; and Step 303 of receiving a response message from the target core network through the base station.

According to the embodiments of the present disclosure, upon the receipt of the access request carrying the target NAS message (e.g., the first NAS message corresponding to the first network, the second NAS message corresponding to the second network, or both) from the mobile communication terminal capable of being connected to the first network and the second network simultaneously, the base station may transmit the target NAS message to the target core network to which the base station is connected, and the target core network may determine whether the mobile communication terminal is allowed to be connected to the target core network in accordance with the target NAS message. On the basis of the above procedure, the mobile communication terminal capable of being connected to various core networks may access to the core network through different base stations, and thereby the code network may determine whether the mobile communication terminal is allowed to access to the core network.

In some embodiments of the present disclosure, the target NAS message may include one of the first NAS message and the second NAS message, or both. The NAS message, which belongs to an NAS, is unknown to a base station which belongs to an access stratum. Hence, a network corresponding to the target core network determined by the base station may probably be different from a network corresponding to the target NAS message. In this case, the target core network may reject the access of the mobile communication terminal thereto. In order to enable the mobile communication terminal to access to an appropriate core network, in a possible embodiment of the present disclosure, the mobile communication terminal may re-initiate an access procedure in accordance with a new NAS message upon the receipt of an access rejection message.

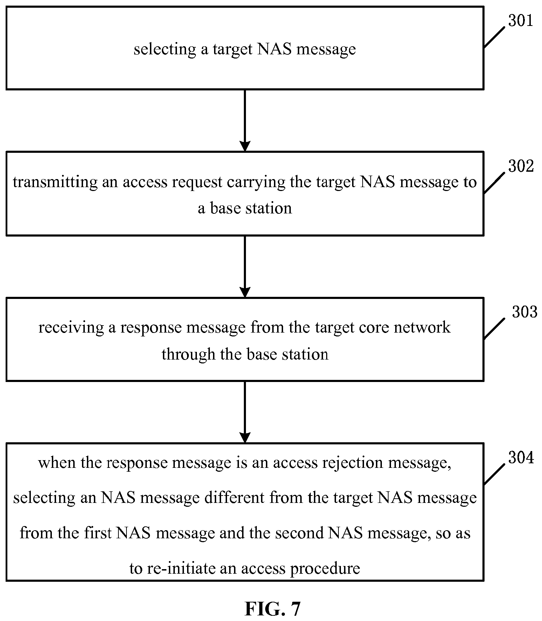

As shown in FIG. 7, the present disclosure further provides in some embodiments an access processing method which includes: Step 301 of selecting a target NAS message, the target NAS message including a first NAS message corresponding to the first network and/or a second NAS message corresponding to the second network; Step 302 of transmitting an access request carrying the target NAS message to a base station, so that the base station transmits the target NAS message to a target core network, the target core network being a core network to which the base station is capable of accessing among a first core network corresponding to the first network and a second core network corresponding to the second network; Step 303 of receiving a response message from the target core network through the base station; and Step 304 of, when the response message is an access rejection message indicating that a network corresponding to the target NAS message is different from a network corresponding to the target core network, selecting an NAS message different from the target NAS message from the first NAS message and the second NAS message, so as to re-initiate an access procedure.

According to the access processing method in the embodiments of the present disclosure, when the network corresponding to the target core network determined by the base station is different from the network corresponding to the target NAS message (i.e., there is NAS mismatching), the base station may forward the access rejection message from the target core network to the mobile communication terminal, so that the mobile communication terminal may re-initiate the access procedure. As a result, it is able for the mobile communication terminal to access to the target core network.

Identically, in order to solve the problems in the re-access procedure, the following improvements will be provided with respect to the two circumstances where the access failure occurs.

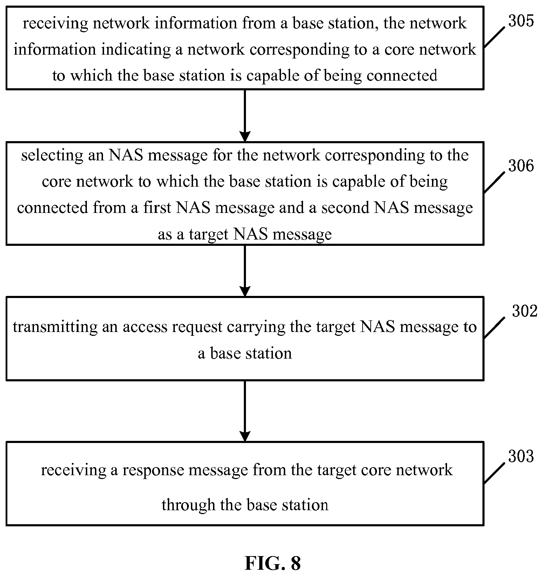

As shown in FIG. 8, the present disclosure provides in some embodiments an access processing method which includes: Step 305 of receiving network information from a base station, the network information indicating a network corresponding to a core network to which the base station is capable of being connected; Step 306 of selecting an NAS message for the network corresponding to the core network to which the base station is capable of being connected from a first NAS message and a second NAS message as a target NAS message in accordance with the network information; Step 302 of transmitting an access request carrying the target NAS message to the base station, so that the base station transmits the target NAS message to a target core network, the target core network being a core network to which the base station is capable of accessing among a first core network corresponding to the first network and a second core network corresponding to the second network; and Step 303 of receiving a response message from the target core network through the base station.

According to the embodiments of the present disclosure, the base station may notify in advance the mobile communication terminal of the network information about the network corresponding to the core network to which the base station is capable of being connected, so as to enable the mobile communication terminal to select the NAS message corresponding to the network. As a result, it is able to prevent the re-access procedure caused when the network corresponding to the only core network to which the base station is capable of being connected is different from the network corresponding to the target NAS message, thereby to accelerate the access.

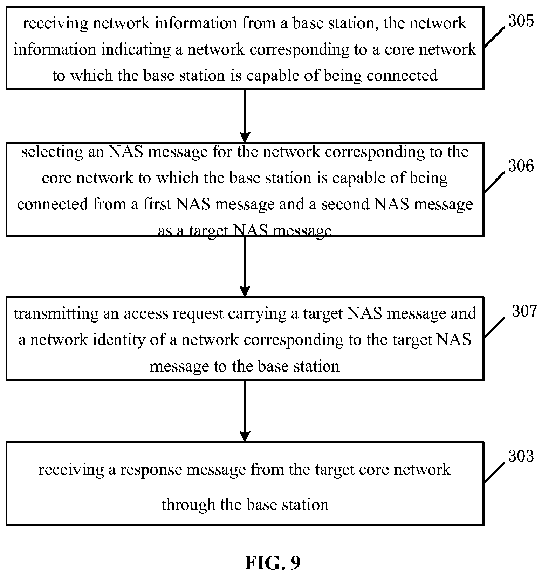

The present disclosure further provides in some embodiments an access processing method which, as shown in FIG. 9, includes: Step 305 of receiving network information from a base station, the network information indicating a network corresponding to a core network to which the base station is capable of being connected; Step 306 of selecting an NAS message for the network corresponding to the core network to which the base station is capable of being connected from a first NAS message and a second NAS message as a target NAS message in accordance with the network information; Step 307 of transmitting an access request carrying a target NAS message and a network identity of a network corresponding to the target NAS message to the base station, so that the base station transmits the target NAS message to a target core network, the target core network being a core network corresponding to the network indicated by the network identity; and Step 303 of receiving a response message from the target core network through the base station.

According to the embodiments of the present disclosure, the base station may notify in advance the mobile communication terminal of the network information about the network corresponding to the core network to which the base station is capable of being connected, so as to enable the mobile communication terminal to select the NAS message for the network corresponding to the core network to which the base station is capable of being connected. As a result, it is able to prevent the re-access procedure caused when the network corresponding to the only core network to which the base station is capable of being connected is different from the network corresponding to the target NAS message, thereby to accelerate the access. In addition, the network identity of the network corresponding to the target NAS message is carried in the access request, so the target core network determined by the base station may be the same as the network corresponding to the target NAS message. As a result, it is able for the mobile communication terminal to access to the core network through a single access procedure, thereby to accelerate the access.

In the step of receiving the network information from the base station, the network information may be received through an SIB or RRC signaling.

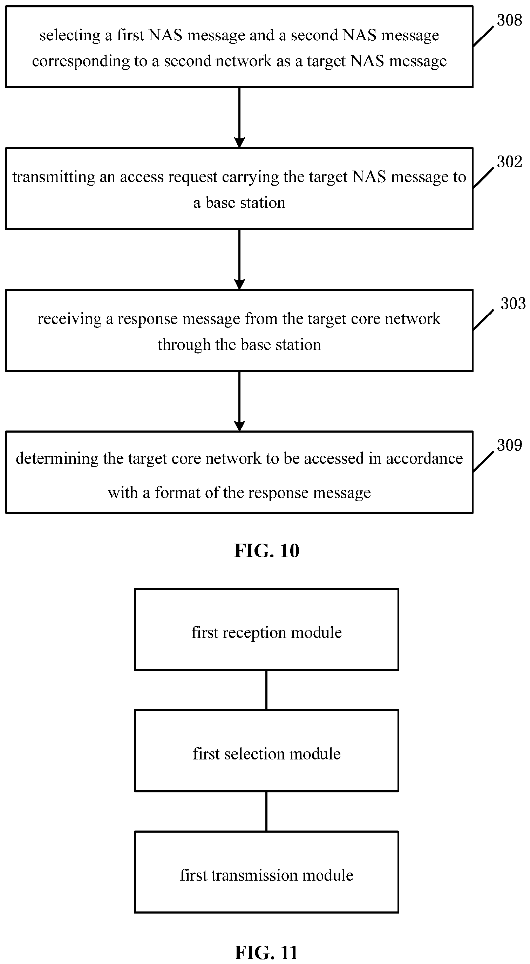

In order to prevent the re-access procedure, the present disclosure further provides in some embodiments an access processing method. A target NAS message includes a first NAS message corresponding to a first network and a second NAS message corresponding to a second network. As shown in FIG. 10, the access processing method includes: Step 308 of selecting the first NAS message and the second NAS message corresponding to the second network as the target NAS message; Step 302 of transmitting an access request carrying the target NAS message to a base station, so that the base station transmits the target NAS message to a target core network, the target core network being a core network to which the base station is capable of accessing among a first core network corresponding to the first network and a second core network corresponding to the second network; Step 303 of receiving a response message from the target core network through the base station; and Step 309 of determining the target core network to the accessed in accordance with a format of the response message.

Detailed description will be given as follows.

When there are two target NAS messages, a processing procedure will be described as follows. The mobile communication terminal may transmit the access request carrying both the first NAS message and the second NAS message. Upon the receipt of the access request, the base station may randomly select the target core network. The target core network may process one of the first NAS message and the second NAS message in accordance with the network corresponding to the target core network, and return the response message to the mobile communication terminal. The mobile communication terminal may then determine the target core network to be accessed in accordance with the format of the response message.

For the LTE eNB, it may merely forward the NAS message to the EPC. Upon the receipt of the access request, the EPC may perform security authentication on the mobile communication terminal in accordance with the first NAS message. Upon the receipt of the NAS message, when the mobile communication terminal determines that the NAS message is in an EPC format, the mobile communication terminal may access to the EPC through the LTE eNB, and the subsequent interaction may be performed in accordance with the EPC NAS message.

For the eLTE eNB, it may forward the NAS message from the mobile communication terminal to the EPC or the 5G new core network. Upon the receipt of the access request, the EPC or the 5G new core network may perform the security authentication on the mobile communication terminal in accordance with the corresponding NAS message. Upon the receipt of the NAS message, when the mobile communication terminal determines that the NAS message is in the EPC format, the mobile communication terminal may access to the EPC through the eLTE eNB, and the subsequent interaction may be performed in accordance with the EPC NAS message. When the NAS message is in a 5G Core Network (CN) format, the mobile communication terminal may access to the 5G CN, and the subsequent interaction may be performed in accordance with the 5G CN NAS message.

The present disclosure further provides in some embodiments a base station which, as shown in FIG. 11, includes: a first reception module configured to receive an access request carrying a target NAS message from a mobile communication terminal capable of being connected to a first network and a second network, the target NAS message including a first NAS message corresponding to the first network and/or a second NAS message corresponding to the second network; a first selection module configured to determine a target core network, the target core network being a core network to which the base station is capable of accessing among a first core network corresponding to the first network and a second core network corresponding to the second network; and a first transmission module configured to transmit the target NAS message to the target core network.

Of course, in order to ensure the access procedure, in some embodiments of the present disclosure, the base station may further include: a second reception module configured to receive an access rejection message from the target core network when a network corresponding to the target NAS message is different from a network corresponding to the target core network; and a second transmission module configured to transmit the access rejection message to the mobile communication terminal and notify the mobile communication terminal to re-initiate an access procedure in accordance with a new NAS message.

In order to prevent the access failure, in some embodiments of the present disclosure, the base station may further include a third transmission module configured to transmit network information indicating a network corresponding to the core network to which the base station is capable of being connected, so as to enable the mobile communication terminal to select an NAS message for the network corresponding to the core network to which the base station is capable of being connected from the first NAS message and the second NAS message as the target NAS message in accordance with the network information.

In order to further prevent the re-access procedure, in some embodiments of the present disclosure, a network identity of a network corresponding to the target NAS message may be further carried in the access request. The first selection module is further configured to determine a core network corresponding to the network indicated by the network identity as the target core network. The third transmission module is further configured to transmit the network information through an SIB or RRC signaling.

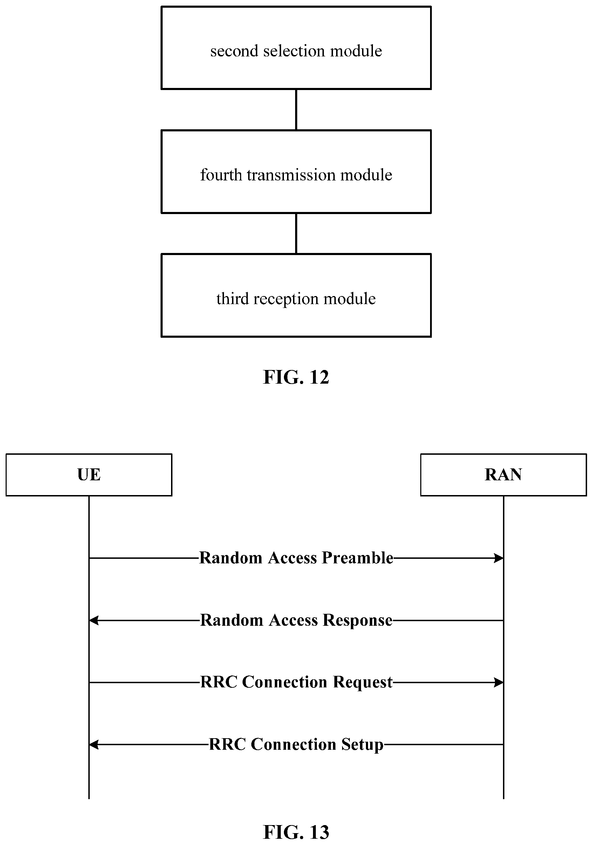

The present disclosure further provides in some embodiments a mobile communication terminal capable of being connected to a first network and a second network, which, as shown in FIG. 12, includes: a second selection module configured to select a target NAS message, the target NAS message including a first NAS message corresponding to the first network and/or a second NAS message corresponding to the second network; a fourth transmission module configured to transmit an access request carrying the target NAS message to a base station, so that the base station transmits the target NAS message to a target core network, the target core network being a core network to which the base station is capable of accessing among a first core network corresponding to the first network and a second core network corresponding to the second network; and a third reception module configured to receive a response message from the target core network through the base station.

Of course, in order to ensure an access procedure, in some embodiments of the present disclosure, the mobile communication terminal may further include a re-access module configured to, when the response message is an access rejection message indicating that a network corresponding to the target NAS message is different from a network corresponding to the target core network, select an NAS message different from the target NAS message from the first NAS message and the second NAS message as a new target NAS message, and re-initiate an access procedure.

In order to prevent the access failure, in some embodiments of the present disclosure, the mobile communication terminal may further include a fourth reception module configured to receive network information from the base station, and the network information indicates a network corresponding to the core network to which the base station is capable of being connected. The second selection module is further configured to select an NAS message for the network corresponding to the core network to which the base station is capable of being connected from the first NAS message and the second NAS message as the target NAS message in accordance with the network information.

In some embodiments of the present disclosure, in order to further prevent the re-access procedure, a network identity of a network corresponding to the target NAS message may be further carried in the access request, so as to enable the base station to determine a core network corresponding to the network indicated by the network identity as the target core network.

The fourth reception module is further configured to receive the network information through an SIB or RRC signaling.

In order to prevent the re-access procedure, in some embodiments of the present disclosure, the target NAS message may include the first NAS message corresponding to the first network and the second NAS message corresponding to the second network. The mobile communication terminal may further include a target core network determination module configured to determine the target core network in accordance with a network corresponding to the response message.

Detailed description will be given as follows when the first network is a 4G mobile communication network and the second network is a 5G mobile communication network.

When there is merely one target NAS message, the following circumstances may be involved.
1. The target NAS message is an NAS message corresponding to the 4G mobile communication network, the base station is an LTE eNB in a 4G mobile communication system, and the target core network is an EPC corresponding to the 4G mobile communication network.
2. The target NAS message is an NAS message corresponding to the 4G mobile communication network, the base station is an eLTE eNB in a 5G mobile communication system, and the target core network is the EPC corresponding to the 4G mobile communication network.
3. The target NAS message is an NAS message corresponding to the 4G mobile communication network, the base station is the eLTE eNB in a 5G mobile communication system, and the target core network is a 5G CN corresponding to the 5G mobile communication network.
4. The target NAS message is an NAS message corresponding to the 5G mobile communication network, the base station is the LTE eNB in the 4G mobile communication system, and the target core network is the EPC corresponding to the 4G mobile communication network.
5. The target NAS message is an NAS message corresponding to the 5G mobile communication network, the base station is the eLTE eNB in a 5G mobile communication system, and the target core network is the EPC corresponding to the 4G mobile communication network.
6. The target NAS message is an NAS message corresponding to the 5G mobile communication network, the base station is the eLTE eNB in a 5G mobile communication system, and the target core network is the 5G CN corresponding to the 5G mobile communication network.

The above-mentioned six circumstances are all possible combinations when the target NAS message and the target core network are selected randomly.

In the first, second and sixth circumstances, the network corresponding to the target NAS message is the same as the network corresponding to the target core network, so the mobile communication terminal may access to the target core network successfully.

In the third, fourth and fifth circumstances, the network corresponding to the target NAS message is different from the network corresponding to the target core network, so the mobile communication terminal may not access to the target core network successfully for the first time. At this time, the mobile communication terminal needs to select a new target NAS message such that a network corresponding to the new target NAS message is the same as the network corresponding to the target core network, so as to access to the target core network successfully.

When the base station notifies the mobile communication terminal of the network information about the network corresponding to the core network to which the base station is capable of being connected, the mobile communication terminal may select the NAS message for the network corresponding to the core network to which the base station is capable of being connected during the initiation of the access procedure. At this time, the above six circumstances may be reduced to five circumstances, i.e., the fourth circumstance, in which it is necessary to re-initiate the access procedure, may not exist.

The network information may be transmitted in conjunction with an access procedure in FIG. 13. For example, it may be notified to the mobile communication terminal through an SIB message or through RRC signaling or RRC connection setup signaling from the base station in an initial access procedure as shown in FIG. 12.

When the base station notifies the mobile communication terminal of the network information about the network corresponding to the core network to which the base station is capable of being connected, the mobile communication terminal may select the NAS message for the network corresponding to the core network to which the base station is capable of being connected during the initiation of the access procedure. At this time, when the network identity of the network corresponding to the target NAS message is further carried in the access request the above six circumstances may be reduced to three circumstances, i.e., the third, fourth and fifth circumstance, in which it is necessary to re-initiate the access procedure, may not exist.

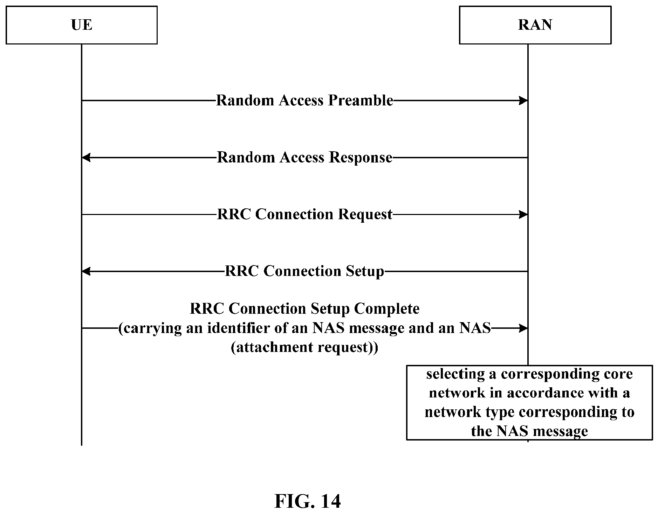

In the above circumstances, the mobile communication terminal may directly carry the NAS message, as well as an identifier of the NAS message, in an attachment request message carried in an RRC connection setup completion message, as shown in FIG. 14. A network element (e.g., a base station) of a wireless access network may select the corresponding core network in accordance with the identifier of the NAS message.

When there are two target NAS messages, the processing procedure will be described as follows. The mobile communication terminal may transmit the access request carrying both the first NAS message and the second NAS message. Upon the receipt of the access request, the base station may randomly select the target core network. The target core network may process one of the first NAS message and the second NAS message in accordance with the network corresponding to the target core network, and return the NAS message in a corresponding format to the mobile communication terminal. The mobile communication terminal may determine the target core network to be accessed in accordance with the format of the NAS message.

For the LTE eNB, it may merely forward the NAS message to the EPC. Upon the receipt of the access request, the EPC may perform security authentication on the mobile communication terminal in accordance with the first NAS message. Upon the receipt of the NAS message, when the mobile communication terminal determines that the NAS message is in an EPC format, the mobile communication terminal may access to the EPC through the LTE eNB, and the subsequent interaction may be performed in accordance with the EPC NAS message.

For the eLTE eNB, it may forward the NAS message from the mobile communication terminal to the EPC or the 5G new core network. Upon the receipt of the access request, the EPC or the 5G new core network may perform the security authentication on the mobile communication terminal in accordance with the corresponding NAS message. Upon the receipt of the NAS message, when the mobile communication terminal determines that the NAS message is in the EPC format, the mobile communication terminal may access to the EPC through the eLTE eNB, and the subsequent interaction may be performed in accordance with the EPC NAS message. When the NAS message is in the 5G CN format, the mobile communication terminal may access to the 5G CN, and the subsequent interaction may be performed in accordance with the 5G CN NAS message.

It should be appreciated that, such terms as "include" or "including" or any other variations involved in the present disclosure intend to provide non-exclusive coverage, so that a procedure, method, article or device including a series of elements may also include any other elements not listed herein, or may include any inherent elements of the procedure, method, article or device. If without any further limitations, for the elements defined by such sentence as "including one ...", it is not excluded that the procedure, method, article or device including the elements may also include any other identical elements.

The serial numbers of the embodiments are for illustrative purposes only, and none of them is superior to the others.

Through the above-mentioned description, it may be apparent for a person skilled in the art that the present disclosure may be implemented by hardware, or by software as well as a necessary common hardware platform. Based on this understanding, the technical solutions of the present disclosure may appear in the form of software products, which may be stored in a storage medium (Read-Only Memory (ROM), Random Access Memory (RAM), magnetic disc or optical disk) and include several instructions so as to enable a terminal device (mobile phone, computer, server, air conditioner or network equipment) to execute the methods according to the embodiments of the present disclosure.

It should be further appreciated that, the device and method may be implemented in any other ways. For example, the embodiments for the apparatus are merely for illustrative purposes, and the modules or units are provided merely on the basis of their logic functions. During the actual application, some modules or units may be combined together or integrated into another system. Alternatively, some functions of the module or units may be omitted or not executed. In addition, the coupling connection, direct coupling connection or communication connection between the modules or units may be implemented via interfaces, and the indirect coupling connection or communication connection between the modules or units may be implemented in an electrical or mechanical form or in any other form.

In addition, the functional units in the embodiments of the present disclosure may be integrated into a processing unit, or the functional units may exist independently, or two or more functional units may be combined together. These units may be implemented in the form of hardware, or hardware plus software.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These computer program instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These computer program instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

The above embodiments are for illustrative purposes only, but the present disclosure is not limited thereto. Obviously, a person skilled in the art may make further modifications and improvements without departing from scope of the appended claims.

## Claims

1. An access processing method for use in a base station, comprising:
transmitting (206) to a mobile communication terminal network information indicating a network corresponding to a
core network to which the base station supports being connected, so as to enable the mobile communication terminal to select a target Non-Access Stratum, NAS, message corresponding to the core network to which the base station is capable of connecting;
receiving (201) an access request carrying the target NAS message from the mobile communication terminal capable of connecting to a first network and a second network, the target NAS message comprising a first NAS message corresponding to the first network and/or a second NAS message corresponding to the second network;
determining (202) a target core network, the target core network being a core network to which the base station is capable of connecting among a first core network corresponding to the first network and a second core network corresponding to the second network; and
transmitting (203) the target NAS message to the target core network,
wherein the first network is one of 4G mobile communication system and 5G mobile communication system, while the second network is the other of 4G mobile communication system and 5G mobile communication system; and
wherein the first core network is one of an Evolved Packet Core, EPC, network of the 4G mobile communication system and a new core network of the 5G mobile communication system, while the second core network is the other of the EPC network of the 4G mobile communication system and the new core network of the 5G mobile communication system.

2. The access processing method according to claim 1, further comprising:
receiving (204) an access rejection message from the target core network when a network corresponding to the target NAS message is different from a network corresponding to the target core network; and
transmitting (205) the access rejection message to the mobile communication terminal and notifying the mobile communication terminal to re-initiate an access procedure in accordance with a new NAS message.

3. The access processing method according to claim 1, wherein the network information is transmitted to enable the mobile communication terminal to select an NAS message for the network corresponding to the core network to which the base station is capable of connecting from the first NAS message and the second NAS message as the target NAS message in accordance with the network information.

4. The access processing method according to claim 3, wherein a network identity of a network corresponding to the target NAS message is further carried in the access request, and the determining the target core network comprises determining a core network corresponding to the network indicated by the network identity as the target core network.

5. The access processing method according to claim 3, wherein the transmitting the network information about the network corresponding to the core network to which the base station is capable of connecting comprises:
transmitting the network information through a System Information Block, SIB, or Radio Resource Control, RRC, signaling.

6. An access processing method for use in a mobile communication terminal capable of connecting to a first network and a second network, comprising:
receiving (305) network information from a base station, the network information indicating a network corresponding to a core network to which the base station supports being connected;
selecting (306) a target NAS message corresponding to the core network to which the base station is capable of connecting, the target NAS message comprising a first NAS message corresponding to the first network and/or a second NAS message corresponding to the second network;
transmitting (302) an access request carrying the target NAS message to the base station, so that the base station transmits the target NAS message to a target core network, the target core network being a core network to which the base station is capable of connecting among a first core network corresponding to the first network and a second core network corresponding to the second network; and
receiving (303) a response message from the target core network through the base station,
wherein the first network is one of 4G mobile communication system and 5G mobile communication system, while the second network is the other of 4G mobile communication system and 5G mobile communication system; and
wherein the first core network is one of an Evolved Packet Core, EPC, network of the 4G mobile communication system and a new core network of the 5G mobile communication system, while the second core network is the other of the EPC network of the 4G mobile communication system and the new core network of the 5G mobile communication system.

7. The access processing method according to claim 6, further comprising:
when the response message is an access rejection message indicating that a network corresponding to the target NAS message is different from a network corresponding to the target core network, selecting an NAS message different from the target NAS message from the first NAS message and the second NAS message as a new target NAS message, and re-initiating an access procedure.

8. The access processing method according to claim 6, wherein the selecting the target NAS message comprises selecting an NAS message for the network corresponding to the core network to which the base station is capable of connecting from the first NAS message and the second NAS message as the target NAS message in accordance with the network information.

9. The access processing method according to claim 8, wherein a network identity of a network corresponding to the target NAS message is further carried in the access request, so as to enable the base station to determine a core network corresponding to the network indicated by the network identity as the target core network.

10. The access processing method according to claim 8, wherein the receiving the network information from the base station comprises receiving the network information through an SIB or RRC signaling.

11. The access processing method according to claim 6, wherein the target NAS message comprises the first NAS message corresponding to the first network and the second NAS message corresponding to the second network, and the access processing method further comprises determining the target core network in accordance with a network corresponding to the response message.

12. A base station, comprising:
a first reception module configured to receive (201) an access request carrying a target NAS message from a mobile communication terminal capable of connecting to a first network and a second network, the target NAS message comprising a first NAS message corresponding to the first network and/or a second NAS message corresponding to the second network;
a first selection module configured to determine (202) a target core network, the target core network being a core network to which the base station is capable of connecting among a first core network corresponding to the first network and a second core network corresponding to the second network;
a first transmission module configured to transmit (203) the target NAS message to the target core network; and
a third transmission module configured to transmit (206) to the mobile communication terminal network information indicating a network corresponding to the core network to which the base station supports being connected, so as to enable the mobile communication terminal to select the target NAS message corresponding to the core network to which the base station is capable of connecting,
wherein the first network is one of 4G mobile communication system and 5G mobile communication system, while the second network is the other of 4G mobile communication system and 5G mobile communication system; and
wherein the first core network is one of an Evolved Packet Core, EPC, network of the 4G mobile communication system and a new core network of the 5G mobile communication system, while the second core network is the other of the EPC network of the 4G mobile communication system and the new core network of the 5G mobile communication system.

13. The base station according to claim 12, further comprising:
a second reception module configured to receive (204) an access rejection message from the target core network when a network corresponding to the target NAS message is different from a network corresponding to the target core network; and
a second transmission module configured to transmit (205) the access rejection message to the mobile communication terminal and notify the mobile communication terminal to re-initiate an access procedure in accordance with a new NAS message,
wherein the network information is transmitted to enable the mobile communication terminal to select an NAS message for the network corresponding to the core network to which the base station is capable of connecting from the first NAS message and the second NAS message as the target NAS message in accordance with the network information.

14. The base station according to claim 13, wherein a network identity of a network corresponding to the target NAS message is further carried in the access request, and the first selection module is further configured to determine a core network corresponding to the network indicated by the network identity as the target core network; and
wherein the third transmission module is further configured to transmit the network information through an SIB or RRC signaling.

15. A mobile communication terminal capable of connecting to a first network and a second network, comprising:
a second selection module configured to select (306) a target NAS message corresponding to a core network to which a base station is capable of connecting, the target NAS message comprising a first NAS message corresponding to the first network and/or a second NAS message corresponding to the second network;
a fourth transmission module configured to transmit (302) an access request carrying the target NAS message to the base station, so that the base station transmits the target NAS message to a target core network, the target core network being a core network to which the base station is capable of connecting among a first core network corresponding to the first network and a second core network corresponding to the second network;
a third reception module configured to receive (303) a response message from the target core network through the base station; and
a fourth reception module configured to receive (305) network information from the base station, the network information indicating a network corresponding to the core network to which the base station supports being connected,
wherein the first network is one of 4G mobile communication system and 5G mobile communication system, while the second network is the other of 4G mobile communication system and 5G mobile communication system; and
wherein the first core network is one of an Evolved Packet Core, EPC, network of the 4G mobile communication system and a new core network of the 5G mobile communication system, while the second core network is the other of the EPC network of the 4G mobile communication system and the new core network of the 5G mobile communication system.

## Patentansprüche

1. Zugangsverarbeitungsverfahren zur Verwendung in einer Basisstation mit den Schritten:
Übertragen (206) von Netzinformation, die ein Netz bezeichnet, das zu einem Kernnetz passt, mit dem die Basisstation eine Verbindung unterstützt, an ein mobiles Kommunikationsendgerät, um das mobile Kommunikationsendgerät in die Lage zu versetzen, eine Ziel-NAS-Nachricht (Non-Access Stratum) passend zu dem Kernnetz auszuwählen, mit dem die Basisstation sich zu verbinden in der Lage ist;
Empfangen (201) einer Zugangsanforderung, die die Ziel-NAS-Nachricht mitführt, von dem mobilen Kommunikationsendgerät, das in der Lage ist, sich mit einem ersten Netz und einem zweiten Netz zu verbinden, wobei die Ziel-NAS-Nachricht eine erste NAS-Nachricht passend zum ersten Netz und/oder eine zweite NAS-Nachricht passend zum zweiten Netz umfasst;
Bestimmen (202) eines Ziel-Kernnetzes, wobei das Ziel-Kernnetz ein Kernnetz ist, mit dem die Basisstation sich zu verbinden in der Lage ist, unter einem zu dem ersten Netz passenden ersten Kernnetz und einem zu dem zweiten Netz passenden zweiten Kernnetz; und
Senden (203) der Ziel-NAS-Nachricht an das Ziel-Kernnetz,
wobei das erste Netz eines von 4G-Mobilkommunikationssystem und 5G-Mobilkommunikationssystem ist, und das zweite Netz das andere von 4G-Mobilkommunikationssystem und 5G-Mobilkommunikationssystem ist; und
wobei das erste Kernnetz eines von einem Evolved Packet Core, EPC, -Netz des 4G-Mobilkommunikationssystems und einem neuen Kernnetz des 5G-Mobilkommunikationssystems ist, und das zweite Kernnetz das andere von dem EPC-Netz des 4G-Mobilkommunikationssystems und dem neuen Kernnetz des 5G-Mobilkommunikationssystems ist.

2. Zugangsverarbeitungsverfahren nach Anspruch 1, ferner mit den Schritten:
Empfangen (204) einer Zugangsverweigerungsnachricht von dem Ziel-Kernnetz, wenn ein zu der Ziel-NAS-Nachricht passendes Netz von einem zu dem Ziel-Kernnetz passenden Netz verschieden ist; und
Senden (205) der Zugangsverweigerungsnachricht an das mobile Kommunikationsendgerät und Benachrichtigen des mobilen Kommunikationsendgeräts, eine Zugangsprozedur in Übereinstimmung mit einer neuen NAS-Nachricht neu zu initiieren.

3. Zugangsverarbeitungsverfahren nach Anspruch 1, bei dem die Netzinformation übertragen wird, um das mobile Kommunikationsendgerät in die Lage zu versetzen, in Übereinstimmung mit der Netzinformation eine NAS-Nachricht für das Netz, das dem Kernnetz entspricht, mit dem die Basisstation sich zu verbinden in der Lage ist, unter der ersten NAS-Nachricht und der zweiten NAS-Nachricht als die Ziel-NAS-Nachricht auszuwählen.

4. Zugangsverarbeitungsverfahren nach Anspruch 3, bei dem ferner eine Netzidentität eines zu der Ziel-NAS-Nachricht passenden Netzes in der Zugangsanforderung enthalten ist und das Bestimmen des Ziel-Kernnetzes das Bestimmen eines Kernnetzes, das zu dem durch die Netzidentität angegebenen Netz, passt als Ziel-Kernnetz umfasst.

5. Zugangsverarbeitungsverfahren nach Anspruch 3, bei dem das Übertragen der Netzinformationen über das Netz, das dem Kernnetz entspricht, mit dem die Basisstation sich zu verbinden in der Lage ist, umfasst:
Übertragen der Netzinformation mittels SIB- (System Information Block) oder RRC- (Radio Resource Control)-Signalisierung.

6. Zugangsverarbeitungsverfahren zur Verwendung in einem mobilen Kommunikationsendgerät, das zum Verbinden mit einem ersten Netz und einem zweiten Netz in der Lage ist, mit den Schritten:
Empfangen (305) von Netzinformation, die ein Netz bezeichnet, das einem Kernnetz entspricht, mit dem die Basisstation eine Verbindung unterstützt, von einer Basisstation;
Auswählen (306) einer zu dem Kernnetz, mit dem die Basisstation sich zu verbinden in der Lage ist, passenden Ziel-NAS-Nachricht, wobei die Ziel-NAS-Nachricht eine erste NAS-Nachricht passend zu dem ersten Netz und/oder eine zweite NAS-Nachricht passend zu dem zweiten Netz umfasst;
Senden (302) einer Zugangsanforderung, die die Ziel-NAS-Nachricht mitführt, an die Basisstation, so dass die Basisstation die Ziel-NAS-Nachricht an ein Ziel-Kernnetz sendet, wobei das Ziel-Kernnetz dasjenige Kernnetz unter aus einem zu dem ersten Netz passenden ersten Kernnetz und einem zu dem zweiten Netz passenden zweiten Kernnetz ist, mit dem die Basisstation sich zu verbinden in der Lage ist; und
Empfangen (303) einer Antwortnachricht von dem Ziel-Kernnetz über die Basisstation,
wobei das erste Netz eines von 4G-Mobilkommunikationssystem und 5G-Mobilkommunikationssystem ist, und das zweite Netz das andere von 4G-Mobilkommunikationssystem und 5G-Mobilkommunikationssystem ist; und
wobei das erste Kernnetz eines von einem Evolved Packet Core, EPC, Netz des 4G-Mobilkommunikationssystems und einem neuen Kernnetz des 5G-Mobilkommunikationssystems ist, und das zweite Kernnetz das andere von dem EPC-Netz des 4G-Mobilkommunikationssystems und dem neuen Kernnetz des 5G-Mobilkommunikationssystems ist.

7. Zugangsverarbeitungsverfahren nach Anspruch 6, ferner mit dem Schritt:
wenn die Antwortnachricht eine Zugangsverweigerungsnachricht ist, die anzeigt, dass ein zu der Ziel-NAS-Nachricht passendes Netz von einem zu dem Ziel-Kernnetz passenden Netz verschieden ist, Auswählen einer NAS-Nachricht, die sich von der Ziel-NAS-Nachricht unterscheidet, unter der ersten NAS-Nachricht und der zweiten NAS-Nachricht als eine neue Ziel-NAS-Nachricht, und erneutes Initiieren eines Zugangsverfahrens.

8. Zugangsverarbeitungsverfahren nach Anspruch 6, bei dem das Auswählen der Ziel-NAS-Nachricht das Auswählen einer NAS-Nachricht für das zum Kernnetz, mit dem die Basisstation sich zu verbinden in der Lage ist, passende Netz unter der ersten NAS-Nachricht und der zweiten NAS-Nachricht als Ziel-NAS-Nachricht in Übereinstimmung mit der Netzinformation umfasst.

9. Zugangsverarbeitungsverfahren nach Anspruch 8, bei dem eine Netzidentität eines zu der Ziel-NAS-Nachricht passenden Netzes ferner in der Zugangsanforderung mitgeführt wird, um die Basisstation in die Lage zu versetzen, ein zu dem durch die Netzidentität angegebenen Netz passendes Kernnetz als das Ziel-Kernnetz zu bestimmen.

10. Zugangsverarbeitungsverfahren nach Anspruch 8, bei dem das Empfangen der Netzinformation von der Basisstation das Empfangen der Netzinformation durch eine SIB- oder RRC-Signalisierung umfasst.

11. Zugangsverarbeitungsverfahren nach Anspruch 6, bei dem die Ziel-NAS-Nachricht die zum ersten Netz passende erste NAS-Nachricht und die zum zweiten Netz passende zweite NAS-Nachricht umfasst, und das Zugangsverarbeitungsverfahren ferner das Bestimmen des Ziel-Kernnetzes in Übereinstimmung mit einem zur Antwortnachricht passenden Netz umfasst.

12. Basisstation mit:
einem ersten Empfangsmodul, das konfiguriert ist, um von einem mobilen Kommunikationsendgerät, das in der Lage ist, sich mit einem ersten Netz und einem zweiten Netz zu verbinden, eine Zugangsanforderung zu empfangen (201), die eine Ziel-NAS-Nachricht mitführt, wobei die Ziel-NAS-Nachricht eine zu dem ersten Netz passende erste NAS-Nachricht und/oder eine zu dem zweiten Netz passende zweite NAS-Nachricht umfasst;
einem ersten Auswahlmodul, das konfiguriert ist, um unter einem ersten Kernnetz, das zum ersten Netz passt, und einem zweiten Kernnetz, das zum zweiten Netz passt, ein Ziel-Kernnetz zu bestimmen (202), wobei das Ziel-Kernnetz ein Kernnetz ist, mit dem die Basisstation sich zu verbinden in der Lage ist;
einem ersten Sendemodul, das konfiguriert ist, um die Ziel-NAS-Nachricht an das Ziel-Kernnetz zu senden (203); und
einem dritten Sendemodul, das konfiguriert ist, um Netzinformation, die ein zu dem Kernnetz, mit dem die Basisstation eine Verbindung unterstützt, passendes Netz bezeichnet, an das mobile Kommunikationsendgerät zu senden (206), um es dem mobilen Kommunikationsendgerät zu ermöglichen, die zu dem Kernnetz, mit dem die Basisstation sich zu verbinden in der Lage ist, passende Ziel-NAS-Nachricht auszuwählen,
wobei das erste Netz eines von 4G-Mobilkommunikationssystem und 5G-Mobilkommunikationssystem ist, und das zweite Netz das andere von 4G-Mobilkommunikationssystem und 5G-Mobilkommunikationssystem ist; und
wobei das erste Kernnetz eines von einem Evolved Packet Core, EPC, Netz des 4G-Mobilkommunikationssystems und einem neuen Kernnetz des 5G-Mobilkommunikationssystems ist, und das zweite Kernnetz das andere von dem EPC-Netz des 4G-Mobilkommunikationssystems und dem neuen Kernnetz des 5G-Mobilkommunikationssystems ist.

13. Basisstation nach Anspruch 12, ferner mit:
einem zweiten Empfangsmodul, das konfiguriert ist, um eine Zugangsverweigerungsnachricht von dem Ziel-Kernnetz zu empfangen (204), wenn ein zur Ziel-NAS-Nachricht passendes Netz von einem zum Ziel-Kernnetz passenden Netz verschieden ist; und
einem zweiten Sendemodul, das konfiguriert ist, um die Zugangsverweigerungsnachricht an das mobile Kommunikationsendgerät zu senden (205) und das mobile Kommunikationsendgerät zu benachrichtigen, um eine Zugangsprozedur in Übereinstimmung mit einer neuen NAS-Nachricht neu zu initiieren,
wobei die Netzinformation übertragen wird, um das mobile Kommunikationsendgerät in die Lage zu versetzen, in Übereinstimmung mit der Netzinformation eine NAS-Nachricht für das zum Kernnetz, mit dem die Basisstation sich zu verbinden in der Lage ist, passende Netz unter der ersten NAS-Nachricht und der zweiten NAS-Nachricht als die Ziel-NAS-Nachricht auszuwählen.

14. Basisstation nach Anspruch 13, bei der ferner eine Netzidentität eines zu der Ziel-NAS-Nachricht passenden Netzes in der Zugangsanforderung übertragen wird, und das erste Auswahlmodul ferner konfiguriert ist, um ein zu dem durch die Netzidentität angegebenen Netz passendes Kernnetz als Ziel-Kernnetz zu bestimmen; und
wobei das dritte Übertragungsmodul ferner konfiguriert ist, um die Netzinformation durch SIB- oder RRC-Signalisierung zu übertragen.

15. Mobiles Kommunikationsendgerät, das in der Lage ist, eine Verbindung zu einem ersten Netz und einem zweiten Netz herzustellen, mit:
einem zweiten Auswahlmodul, das konfiguriert ist, um eine Ziel-NAS-Nachricht passend zu einem Kernnetz auszuwählen (306), mit dem eine Basisstation sich zu verbinden in der Lage ist, wobei die Ziel-NAS-Nachricht eine erste NAS-Nachricht passend zu dem ersten Netz und/oder eine zweite NAS-Nachricht passend zu dem zweiten Netz umfasst;
einem vierten Sendemodul, das konfiguriert ist, um eine Zugangsanforderung, die die Ziel-NAS-Nachricht mitführt, an die Basisstation zu senden (302), so dass die Basisstation die Ziel-NAS-Nachricht an ein Ziel-Kernnetz sendet, wobei das Ziel-Kernnetz dasjenige Kernnetz unter einem zu dem ersten Netz passenden ersten Kernnetz und einem zu dem zweiten Netz passenden zweiten Kernnetz ist, mit dem sich die Basisstation sich zu verbinden in der Lage ist;
einem dritten Empfangsmodul, das konfiguriert ist, um eine Antwortnachricht von dem Ziel-Kernnetz über die Basisstation zu empfangen (303); und
einem vierten Empfangsmodul, das konfiguriert ist, um Netzinformation von der Basisstation zu empfangen (305), wobei die Netzinformation ein Netz angibt, das zu dem Kernnetz passt, mit dem die Basisstation eine Verbindung unterstützt,
wobei das erste Netz eines von 4G-Mobilkommunikationssystem und 5G-Mobilkommunikationssystem ist, und das zweite Netzwerk das andere von 4G-Mobilkommunikationssystem und 5G-Mobilkommunikationssystem ist; und
wobei das erste Kernnetz eines von einem Evolved Packet Core, EPC, -Netzwerk des 4G-Mobilkommunikationssystems und einem neuen Kernnetzwerk des 5G-Mobilkommunikationssystems ist, während das zweite Kernnetzwerk das andere von dem EPC-Netzwerk des 4G-Mobilkommunikationssystems und dem neuen Kernnetzwerk des 5G-Mobilkommunikationssystems ist.

## Revendications

1. Procédé de traitement d'accès pour utilisation dans une station de base, prévoyant de :
transmettre (206) à un terminal de communication mobile une information de réseau indiquant un réseau correspondant à un cœur de réseau avec lequel la station de base peut être connectée, de façon à permettre au terminal de communication mobile de sélectionner un message de Strate de Non-Accès, NAS, cible correspondant au cœur de réseau auquel la station de base est capable de se connecter ;
recevoir (201) une requête d'accès portant le message de NAS cible provenant du terminal de communication mobile capable de se connecter à un premier réseau et à un second réseau, le message de NAS cible comprenant un premier message de NAS correspondant au premier réseau et/ou un second message de NAS correspondant au second réseau ;
déterminer (202) un cœur de réseau cible, le cœur de réseau cible étant un cœur de réseau auquel la station de base est capable de se connecter parmi un premier cœur de réseau correspondant au premier réseau et un second cœur de réseau correspondant au second réseau ; et
transmettre (203) le message de NAS cible au cœur de réseau cible,
dans lequel le premier réseau est l'un parmi un système de communication mobile 4G et un système de communication mobile 5G, tandis que le second réseau est l'autre parmi le système de communication mobile 4G et le système de communication mobile 5G ; et
dans lequel le premier cœur de réseau est l'un parmi un Cœur de réseau par Paquets Evolué, EPC, du système de communication mobile 4G et un nouveau cœur de réseau du système de communication mobile 5G, tandis que le second cœur de réseau est l'autre parmi le cœur de réseau EPC du système de communication mobile 4G et le nouveau cœur de réseau du système de communication mobile 5G.

2. Procédé de traitement d'accès selon la revendication 1, prévoyant en outre de :
recevoir (204) un message de refus d'accès provenant du cœur de réseau cible lorsqu'un réseau correspondant au message de NAS cible est différent d'un réseau correspondant au cœur de réseau cible ; et
transmettre (205) le message de refus d'accès au terminal de communication mobile et de notifier au terminal de communication mobile de relancer une procédure d'accès en accord avec un nouveau message de NAS.

3. Procédé de traitement d'accès selon la revendication 1, dans lequel l'information de réseau est transmise pour permettre au terminal de communication mobile de sélectionner un message de NAS pour le réseau correspondant au cœur de réseau auquel la station de base est capable de se connecter parmi le premier message de NAS et le second message de NAS en tant que message de NAS cible en accord avec l'information de réseau.

4. Procédé de traitement d'accès selon la revendication 3, dans lequel une identité de réseau d'un réseau correspondant au message de NAS cible est en outre portée dans la requête d'accès, et la détermination du cœur de réseau cible prévoit la détermination d'un cœur de réseau correspondant au réseau indiqué par l'identité de réseau en tant que cœur de réseau cible.

5. Procédé de traitement d'accès selon la revendication 3, dans lequel la transmission de l'information de réseau concernant le réseau correspondant au cœur de réseau auquel la station de base est capable de se connecter prévoit de :
transmettre l'information de réseau via un signal Bloc d'Information Système, SIB, ou Contrôle de Ressource Radio, RRC.

6. Procédé de traitement d'accès pour une utilisation dans un terminal de communication mobile capable de se connecter à un premier réseau et à un second réseau, prévoyant de :
recevoir (305) une information de réseau provenant d'une station de base, l'information de réseau indiquant un réseau correspondant à un cœur de réseau avec lequel la station de base est compatible pour s'y connecter ;
sélectionner (306) un message de NAS cible correspondant au cœur de réseau auquel la station de base est capable de se connecter, le message de NAS cible comprenant un premier message de NAS correspondant au premier réseau et/ou un second message de NAS correspondant au second réseau ;
transmettre (302) une requête d'accès portant le message de NAS cible à la station de base, de façon que la station de base transmette le message de NAS cible à un cœur de réseau cible, le cœur de réseau cible étant un cœur de réseau auquel la station de base est capable de se connecter parmi un premier cœur de réseau correspondant au premier réseau et un second cœur de réseau correspondant au second réseau ; et
recevoir (303) un message de réponse provenant du cœur de réseau cible via la station de base,
dans lequel le premier réseau est l'un parmi un système de communication mobile 4G et un système de communication mobile 5G, tandis que le second réseau est l'autre parmi le système de communication mobile 4G et le système de communication mobile 5G ; et
dans lequel le premier cœur de réseau est l'un parmi un Cœur de réseau par Paquets Evolué, EPC, du système de communication mobile 4G et un nouveau cœur de réseau du système de communication mobile 5G, tandis que le second cœur de réseau est l'autre parmi le cœur de réseau EPC du système de communication mobile 4G et le nouveau cœur de réseau du système de communication mobile 5G.

7. Procédé de traitement d'accès selon la revendication 6, prévoyant en outre :
lorsque le message de réponse est un message de refus d'accès indiquant qu'un réseau correspondant au message de NAS cible est différent d'un réseau correspondant au cœur de réseau cible, de sélectionner un message de NAS différent du message de NAS cible parmi le premier message de NAS et le second message de NAS en tant que nouveau message de NAS cible, et de relancer une procédure d'accès.

8. Procédé de traitement d'accès selon la revendication 6, dans lequel la sélection du message de NAS cible prévoit de sélectionner un message de NAS pour le réseau correspondant au cœur de réseau auquel la station de base est capable de se connecter parmi le premier message de NAS et le second message de NAS en tant que message de NAS cible en accord avec l'information de réseau.

9. Procédé de traitement d'accès selon la revendication 8, dans lequel une identité de réseau d'un réseau correspondant au message de NAS cible est en outre portée dans la requête d'accès, de façon à permettre à la station de base de déterminer un cœur de réseau correspondant au réseau indiqué par l'identité de réseau en tant que cœur de réseau cible.

10. Procédé de traitement d'accès selon la revendication 8, dans lequel la réception de l'information de réseau provenant de la station de base prévoit la réception de l'information de réseau via un signal SIB ou RRC.

11. Procédé de traitement d'accès selon la revendication 6, dans lequel le message de NAS cible comprend le premier message de NAS correspondant au premier réseau et le second message de NAS correspondant au second réseau, et le procédé de traitement d'accès prévoit en outre la détermination du cœur de réseau cible en accord avec un réseau correspondant au message de réponse.

12. Station de base, comprenant :
un premier module de réception configuré pour recevoir (201) une requête d'accès portant un message de NAS cible provenant d'un terminal de communication mobile capable de se connecter à un premier réseau et à un second réseau, le message de NAS cible comprenant un premier message de NAS correspondant au premier réseau et/ou un second message de NAS correspondant au second réseau ;
un premier module de sélection configuré pour déterminer (202) un cœur de réseau cible, le cœur de réseau cible étant un cœur de réseau auquel la station de base est capable de se connecter parmi un premier cœur de réseau correspondant au premier réseau et un second cœur de réseau correspondant au second réseau ;
un premier module de transmission configuré pour transmettre (203) le message de NAS cible au cœur de réseau cible ; et
un troisième module de transmission configuré pour transmettre (206) au terminal de communication mobile l'information de réseau indiquant un réseau correspondant au cœur de réseau avec lequel la station de base est compatible pour s'y connecter, de façon à permettre au terminal de communication mobile de sélectionner le message de NAS cible correspondant au cœur de réseau auquel la station de base est capable de se connecter,
dans laquelle le premier réseau est l'un parmi un système de communication mobile 4G et un système de communication mobile 5G, tandis que le second réseau est l'autre parmi le système de communication mobile 4G et le système de communication mobile 5G ; et
dans laquelle le premier cœur de réseau est l'un parmi un Cœur de réseau par Paquets Evolué, EPC, du système de communication mobile 4G et un nouveau cœur de réseau du système de communication mobile 5G, tandis que le second cœur de réseau est l'autre parmi le cœur de réseau EPC du système de communication mobile 4G et le nouveau cœur de réseau du système de communication mobile 5G.

13. Station de base selon la revendication 12, comprenant en outre :
un second module de réception configuré pour recevoir (204) un message de refus d'accès provenant du cœur de réseau cible lorsqu'un réseau correspondant au message de NAS cible est différent d'un réseau correspondant au cœur de réseau cible ; et
un second module de transmission module configuré pour transmettre (205) le message de refus d'accès au terminal de communication mobile et de notifier au terminal de communication mobile de relancer une procédure d'accès en accord avec un nouveau message de NAS,
dans laquelle l'information de réseau est transmise pour permettre au terminal de communication mobile de sélectionner un message de NAS pour le réseau correspondant au cœur de réseau auquel la station de base est capable de se connecter parmi le premier message de NAS et le second message de NAS en tant que message de NAS cible en accord avec l'information de réseau.

14. Station de base selon la revendication 13, dans laquelle une identité de réseau d'un réseau correspondant au message de NAS cible est en outre portée dans la requête d'accès, et le premier module de sélection est en outre configuré pour déterminer un cœur de réseau correspondant au réseau indiqué par l'identité de réseau en tant que cœur de réseau cible ; et
dans laquelle le troisième module de transmission est en outre configuré pour transmettre l'information de réseau via un signal SIB ou RRC.

15. Terminal de communication mobile capable de se connecter à un premier réseau et à un second réseau, comprenant :
un second module de sélection configuré pour sélectionner (306) un message de NAS cible correspondant à un cœur de réseau auquel une station de base est capable de se connecter, le message de NAS cible comprenant un premier message de NAS correspondant au premier réseau et/ou un second message de NAS correspondant au second réseau ;
un quatrième module de transmission configuré pour transmettre (302) une requête d'accès portant le message de NAS cible à la station de base, de façon que la station de base transmette le message de NAS cible à un cœur de réseau cible, le cœur de réseau cible étant un cœur de réseau auquel la station de base est capable de se connecter parmi un premier cœur de réseau correspondant au premier réseau et un second cœur de réseau correspondant au second réseau ;
un troisième module de réception configuré pour recevoir (303) un message de réponse provenant du cœur de réseau cible via la station de base ; et
un quatrième module de réception configuré pour recevoir (305) une information de réseau provenant de la station de base, l'information de réseau indiquant un réseau correspondant à un cœur de réseau avec lequel la station de base est compatible pour s'y connecter,
dans lequel le premier réseau est l'un parmi un système de communication mobile 4G et un système de communication mobile 5G, tandis que le second réseau est l'autre parmi le système de communication mobile 4G et le système de communication mobile 5G ; et
dans lequel le premier cœur de réseau est l'un parmi un Cœur de réseau par Paquets Evolué, EPC, du système de communication mobile 4G et un nouveau cœur de réseau du système de communication mobile 5G, tandis que le second cœur de réseau est l'autre parmi le cœur de réseau EPC du système de communication mobile 4G et le nouveau cœur de réseau du système de communication mobile 5G.
